# EUROPÄISCHE PATENTSCHRIFT

(11) **EP 3 491 259 B1**
(45) Veröffentlichungstag und Bekanntmachung des Hinweises auf die Patenterteilung: **25.05.2022**
(21) Anmeldenummer: 17739545.6
(22) Anmeldetag: 11.07.2017
(51) Int. Cl.: F16B 31/02

(54) **BEFESTIGER UND VERFAHREN ZUR FESTSTELLUNG EINER VERSCHIEBUNG EINES BEFESTIGERS**
FASTENER AND METHOD FOR DETERMINING A RELOCATION OF A FASTENER
ORGANE DE FIXATION ET PROCÉDÉ POUR DÉTECTER UN DÉPLACEMENT D'UN ORGANE DE FIXATION

(30) Priorität: 01.08.2016 DE 102016114230; 14.02.2017 DE 102017102868
(43) Veröffentlichungstag der Anmeldung: 05.06.2019
(73) Patentinhaber: Winkelmann, Cord, 27721 Ritterhude (DE)
(72) Erfinder: HORN, Sebastian, 71083 Herrenberg (DE); WINKELMANN, Cord, 27721 Ritterhude (DE)
(74) Vertreter: Weidner Stern Jeschke
(86) Internationale Anmeldenummer: PCT/EP2017/067440
(87) Internationale Veröffentlichungsnummer: WO 2018/024449

(56) Entgegenhaltungen:
- EP-A1- 1 589 237
- WO-A1-2015/170842
- DE-A1- 1 932 899
- DE-A1- 10 236 051
- JP-A- S55 112 540
- US-A- 4 811 618

## Beschreibung

Die Erfindung betrifft einen Befestiger mit den Merkmalen des Oberbegriffs des Anspruchs 1, eine Anordnung mit den Merkmalen des Oberbegriffs des Anspruchs 7 und zwei Verfahren zur Feststellung einer Verschiebung eines solchen Befestigers mit den Merkmalen des Oberbegriffs des Anspruchs 10, bzw. 12.

Der erfindungsgemäße Befestiger ist zu einer sogenannten chemischen Verankerung in einem Befestigungsgrund aus beispielsweise Beton geeignet und vorgesehen. Zur Verankerung bzw. Befestigung wird der Befestiger mit einer aushärtenden Masse wie Mörtel, auch Kunstharzmörtel, Kunstharz oder Klebstoff in einem Bohrloch oder einem sonstigen, an einer Stelle offenen Hohlraum in dem Befestigungsgrund befestigt. Ein weiterer Anwendungsfall ist eine Befestigung des Befestiger durch Einbetten in Kunstharz, Kunststoff oder in einen Verbundwerkstoff, beispielsweise in einem Rotorblatt eines Windkraftwerks. Beispielsweise wird der Befestiger an einem Fuß oder Flansch eines Rotorblattes in das Kunstharz des Rotorblattes als Befestigungsgrund eingebettet oder mit dem Kunststoff umspritzt.

Bei solchen Befestigungen besteht das Problem, einen Schadensfall, nämlich ein Lockern des Befestigers rechtzeitig, das heißt, bereits vor einem vollständigen Versagen, Zum Stand der Technik wird auf die Dokumente EP 1 589 237 A, DE 102 36 051 A und DE 19 32 899 A verwiesen. Dabei zeigt die EP 1 589 237 A einen Befestiger mit einem Gewindeschaft und einem elektrischen Leiter, welcher elektrisch vom Schaft isoliert ist, es fehlt jedoch eine elektrische Messeinrichtung. Aufgabe der Erfindung ist daher, ein Lockern eines Befestigers zu erkennen und einen Befestiger vorzuschlagen, mit dem ein Lockern erkennbar ist.

Diese Aufgabe wird erfindungsgemäß durch die Merkmale der Ansprüche 1, 7, 10 und 12 gelöst. Der erfindungsgemäße Befestiger mit den Merkmalen des Anspruchs 1 weist einen Schaft mit einem Gewinde auf, der sich entlang einer Längsachse erstreckt. Der Befestiger umfasst einen elektrischen Leiter, der elektrisch vom Schaft isoliert in einem Gewindegang des Gewindes angeordnet ist. Der Gewindegang ist eine wendelförmige Kerbe, Nut oder dergleichen in einem Umfang des Schafts und er erstreckt sich in Richtung der Längsachse. Insbesondere ist das Gewinde ein metrisches Gewinde. Der elektrische Leiter ist abschnittsweise oder vorzugsweise über seine gesamte Länge elektrisch vom Schaft des Befestigers isoliert, was durch eine elektrische Isolierung zwischen dem Leiter und einem elektrisch leitenden Schaft oder durch einen elektrisch isolierenden Schaft möglich ist. Die elektrische Isolation kann zudem die Funktion eines Korrosionsschutzes für den elektrischen Leiter übernehmen, insbesondere dann, wenn der Leiter in Umfangsrichtung vollständig von der Isolation umgeben ist. Der Befestiger ist beispielsweise eine Ankerstangen, eine Gewindestange, eine Schraube oder ein Gewindebolzen.

Zu einer Befestigung in einem Befestigungsgrund wird das Gewinde des Befestigers mit dem elektrischen Leiter in seinem Gewindegang vollständig oder mit einem Teil seiner Länge in ein Loch oder einen an einer Stelle offenen Hohlraum im Befestigungsgrund eingebracht und mit einer aushärtenden Masse wie Mörtel, Kunststoff oder Kunstharz befestigt. Typischerweise wird hierzu in der Bautechnik zunächst ein Bohrloch in dem Befestigungsgrund erstellt, beispielsweise in einer Wand aus einem mineralischen Baustoff, insbesondere in einer Wand aus Beton. Danach wird die aushärtbare Masse, beispielsweise ein Zweikomponenten-Kunstharz-Mörtel, vermischt und in das Bohrloch eingebracht und dann der Schaft mit dem daran angeordneten Leiter in das Bohrloch gesteckt. Sofern am Befestiger nur ein Teil der elektrischen Messeinrichtung angeordnet ist, beispielsweise nur der Leiter, wird der Befestiger mit der elektrischen Messeinrichtung verbunden, so dass die Verschiebung gemessen werden kann. Nach einem Aushärten wird die aushärtende Masse als ausgehärtete Masse bezeichnet. Möglich ist auch, dass beispielsweise eine aushärtende Masse wie Kunstharz, ein Kunststoff oder ein Verbundwerkstoff einen Befestigungsgrund bildet. Dies kann insbesondere im Maschinen- und Anlagenbau der Fall sein, beispielsweise wenn der Befestiger als Sensor in einem Verbundwerkstoff eingesetzt wird, beispielsweise in einem Rotorblatt einer Windkraftanlage, das aus einem glasfaserverstärktem Kunststoff hergestellt ist. Möglich ist beispielsweise ein Umspritzen des Befestigers mit Kunststoff oder ein Einlaminieren, wie dies beispielsweise bei der Herstellung von Rotorblättern von Windkraftanlagen zur Anwendung kommt. Bei befestigtem Befestiger ist also der elektrische Leiter von der aushärtenden bzw. ausgehärteten Masse umgeben, in eine aushärtende bzw. ausgehärtete Masse wie Kunstharz oder Kunststoff eingebettet oder steht zumindest in Kontakt mit der aushärtenden bzw. ausgehärteten Masse. Die aushärtende bzw. ausgehärtete Masse bildet ein Dielektrikum. Bewegt sich der erfindungsgemäße Befestiger unter Belastung gegenüber der ausgehärteten Masse und/oder gegenüber dem Befestigungsgrund, ändert sich die Impedanz der ausgehärteten Masse und/oder die Impedanz zwischen dem elektrischen Leiter und dem Schaft und insbesondere die Impedanz der Befestigungsanordnung bestehend aus aushärtenden bzw. ausgehärteten Masse, dem Schaft und dem Leiter. Aufgrund der sich ändernden Impedanz lässt sich eine drohende oder beginnende Schädigung der Befestigung erkennen. Insbesondere wird hierzu der komplexe Widerstand zwischen dem Leiter und dem Schaft und/oder der komplexe Widerstand der Befestigungsanordnung gemessen. Es können bei Belastung des Befestigers Verformungen, insbesondere Querschnittsänderungen durch Dehnung des Leiters und/oder des Schafts auftreten und/oder sich Mikrorisse zwischen dem Gewinde des Schafts und der ausgehärteten Masse und/oder in der ausgehärteten Masse bilden. Beispielsweise bewegt sich der Befestiger unter Last an den Stellen, an denen sich Mikrorisse gebildet haben, gegenüber der ausgehärteten Masse. Oder der Schaft des Befestigers verformt sich unter der Last, ohne dass Mikrorisse auftreten. Eine solche, auch örtlich begrenzte Bewegung und/oder Verformung des Befestigers ändert die Impedanz des zwischen Leiter und Schaft des erfindungsgemäßen Befestigers, so dass beginnende Schäden durch Impedanzmessung erkennbar sind. Zudem lässt sich mit diesem Befestiger ein Bruch des Schafts mittels Impedanzmessung eindeutig registrieren, da dabei der Leiter stark verformt oder durchtrennt wird.

Der elektrische Leiter des erfindungsgemäßen Befestigers bildet für sich allein oder in Verbindung mit dem Schaft des erfindungsgemäßen Befestigers eine elektrische Messeinrichtung oder jedenfalls einen Teil einer elektrischen Messeinrichtung und ermöglicht eine Erkennung einer Verschiebung des Befestigers in einem Befestigungsgrund durch Impedanzmessung.

Vorzugsweise ist das Gewinde des Befestigers höher als der elektrische Leiter, so dass eine Mantelfläche des Gewindes sich außerhalb des elektrischen Leiters befindet. "Höher" bezieht sich auf die radiale Ausdehnung des Gewindes vom Gewindegrund bis zum, bezogen auf die Längsachse des Schafts, radial äußersten Punkt der Gewindeflanke in einem Querschnitt des Befestigers. Das Gewinde steht also von der Längsachse des Schafts aus gesehen nach außen radial über den elektrischen Leiter über. Auf diese Weise ist ein guter Formschluss zwischen dem Gewinde und einer ausgehärteten Masse, in die das Gewinde eingebettet ist, möglich und der elektrische Leiter ist vor einer mechanischen Beanspruchung geschützt oder wird jedenfalls mechanisch weniger stark belastet als ein mit der Mantelfläche des Gewindes bündiger oder sogar nach außen überstehender Leiter.

Der elektrische Leiter kann beispielsweise ein Draht oder eine elektrisch leitende Beschichtung im Gewindegang sein. Zur elektrischen Isolierung vom Schaft kann der Draht beispielsweise eine Kunststoffisolierung aufweisen, wie dies von Elektrokabeln bekannt ist, oder mit einem Isolierlack beschichtet sein. Eine elektrisch leitende Beschichtung kann durch eine zuvor aufgebrachte elektrisch isolierende Trennschicht elektrisch vom Schaft isoliert sein. Eine andere Möglichkeit der elektrischen Isolierung des Leiters vom Schaft ist ein elektrisch isolierender oder ein elektrisch nicht leitender Schaft.

Eine Rückleitung für den elektrischen Leiter ist nicht notwendig, es kann ein Ende des elektrischen Leiters elektrisch isoliert oder jedenfalls ohne elektrisch leitenden Kontakt zum Schaft enden. Als Rückleitung für den elektrischen Leiter sieht eine Ausgestaltung der Erfindung einen elektrisch leitenden Schaft vor, mit dem der elektrische Leiter zumindest an mindestens einer Stelle elektrisch leitend verbunden ist, insbesondere niederohmig leitend verbunden. Vorzugsweise ist der elektrische Leiter an oder nahe an einem Ende des Schafts elektrisch leitend mit dem Schaft verbunden. Der elektrische Leiter kann alternativ oder zudem punktuell oder flächig elektrisch isoliert mit dem Schaft verbunden sein, beispielsweise in der Form einer lokalen, linienförmigen Beschichtung,. Insbesondere ist der elektrische Leiter über die Länge des Schafts mit dem elektrischen Leiter elektrisch isoliert verbunden, wobei die Verbindung über die Länge des Schafts durch mehrere Punkte oder Flächen erfolgen kann, beispielsweise durch eine kontinuierliche, ununterbrochene und flächige Verbindung zwischen Schaft und Leiter über die Länge des Schafts, beispielsweise durch eine linienförmige Beschichtung, insbesondere im Bereich des Gewindegrunds.

Vorzugsweise erstreckt sich der Leiter im Wesentlichen bis zu einem Ende des Schafts, so dass eine Verschiebung oder Formänderung an jeder Stelle des Schafts und über eine gesamte Länge, auf der der Schaft bei einer Befestigung in eine ausgehärtete Masse eingebettet ist, durch Impedanzmessung feststellbar ist.

Das erfindungsgemäße Verfahren mit den Merkmalen des Anspruchs 10 sieht eine Messung der Änderung einer Impedanz zwischen einem elektrischen Leiter, der auf einem Befestigerkörper eines Befestigers angeordnet ist, der in einem Befestigungsgrund befestigt ist und dem Befestigungskörper selbst vor. Der Befestiger weist beispielsweise einen Schaft, insbesondere mit einem Gewinde als Befestigerkörper oder Teil eines Befestigerkörpers auf. Der Befestigungsgrund bildet ein Dielektrikum. Die Impedanz zwischen elektrischem Leiter und Befestiger ändert sich, wenn sich der Befestiger gegenüber dem Befestigungsgrund bewegt, jedenfalls dann, wenn der Befestiger in eine ausgehärtete Masse in dem Befestigungsgrund oder in den Befestigungsgrund selbst eingebettet ist oder wenn zumindest der elektrische Leiter in Kontakt mit dem Befestigungsgrund ist. Zur Impedanzmessung wird insbesondere eine elektrische Wechselspannung an den Leiter angelegt und ein Phasenwinkel bzw. eine Änderung des Phasenwinkels zwischen Spannung und Strom gemessen. Alternativ ist eine Messung des Mittensignals eines durch ein Wechselspannungssignal erregten Spannungsteilers möglich, der aus einem Referenzwiderstand und der Impedanz zwischen Messdraht und Befestiger besteht. Die Amplitude des Mittensignals ändert sich bei konstantem Referenzwiderstand und einer Änderung der Impedanz zwischen Leiter und Schaft. Eine Änderung der Impedanz ist ein Hinweis auf eine Verschiebung des Schafts gegenüber dem Befestigungsgrund bzw. auf eine Verformung des Schafts und/oder des Befestigungsgrunds und damit ein Hinweis auf eine mögliche Schädigung der Befestigung.

Alternativ zur Messung der Impedanz kann zur Feststellung einer Verschiebung eines Befestigers eine Änderung des ohmschen Widerstands des Leiters, insbesondere eine Änderung des ohmschen Widerstands eines Befestigungssystems, das den elektrischen Leiter und den Befestigungskörper des Befestigers umfasst, gemessen werden. Bei einer Verschiebung wird der Leiter verformt, insbesondere gedehnt, wodurch sich sein Querschnitt und damit sein ohmscher Widerstand ändert. Die Dehnung des Leiters kann so groß werden, dass der Leiter reißt, wodurch der Stromfluss unterbrochen wird. Auch ein Reißen des Leiters wird in diesem Zusammenhang als Änderung des ohmschen Widerstands des Leiters verstanden. Wird die Änderung des ohmschen Widerstands des Befestigungssystems gemessen, das den Leiter und den Befestigungskörper umfasst, wird eine Dehnung oder ein Reißen des Befestigers eine Änderung des ohmschen Widerstands des Befestigungssystems verursachen, unabhängig davon, ob der Leiter verformt wird oder nicht.

Gemäß einer Ausgestaltung der Erfindung verläuft der elektrische Leiter beispielsweise mäanderförmig, wellenförmig, zick-zack-förmig oder schraubenlinien- bzw. wendelförmig. Allgemein verläuft der elektrische Leiter bei dieser Ausgestaltung der Erfindung zumindest in Abschnitten nicht parallel zu einer Einbringrichtung des Befestigers in den Befestigungsgrund und/oder nicht parallel zu einer Längsrichtung und/oder zu einer Längsachse des Befestigers. Grund dieser Ausgestaltung ist eine Verlängerung des elektrischen Leiters in dem Bereich, in dem er sich im Befestigungsgrund befindet, um eine Auflösung oder Signalstärke der Impedanzmessung zu verbessern.

Eine Ausgestaltung der Erfindung sieht eine Impedanzmessung als Referenzmessung und mindestens nach einem Zeitabstand eine Wiederholung der Messung vor. Die Referenzmessung ist eine Messung, wenn die aushärtende Masse ausgehärtet ist. Ist die Impedanz zwischen dem elektrische Leiter und dem Befestiger geändert, ist das ein Hinweis auf eine Schädigung der Befestigung. Vorzugsweise wird die Messung in gleichen oder ungleichen Zeitabständen wiederholt. Es kann auch kontinuierlich gemessen werden. Auch kann die Impedanz zwischen dem elektrischen Leiter und dem Befestiger während des Aushärtens der aushärtenden Masse gemessen und aus der Impedanz auf einen Aushärtungszustand der Masse geschlossen werden.

Die Messeinrichtung kann eine Sendeeinheit aufweisen, durch die Messwerte der Messeinrichtung berührungslos an eine Empfängereinheit einer Auswerteeinheit übertragen werden. Hierdurch ist eine einfache Auswertung des Befestigungszustands möglich, beispielsweise in einem Tunnel durch bloße Näherung einer Empfängereinheit der Auswerteeinheit zum Befestiger oder bei einer Windkraftanlage durch Funkübertragung der Messwerte eines im Rotor als Verbindung zur Nabe angeordneten Befestigers.

Die Erfindung wird nachfolgend anhand eines in der Zeichnung dargestellten Ausführungsbeispiels näher erläutert.

Es zeigen:
- Figur 1: ein Ausführungsbeispiel eines erfindungsgemäßen Befestigers in Ansicht; und
- Figur 2: eine vergrößerte Einzelheit einer alternativen Ausführungsform des Befestigers aus Figur 1.

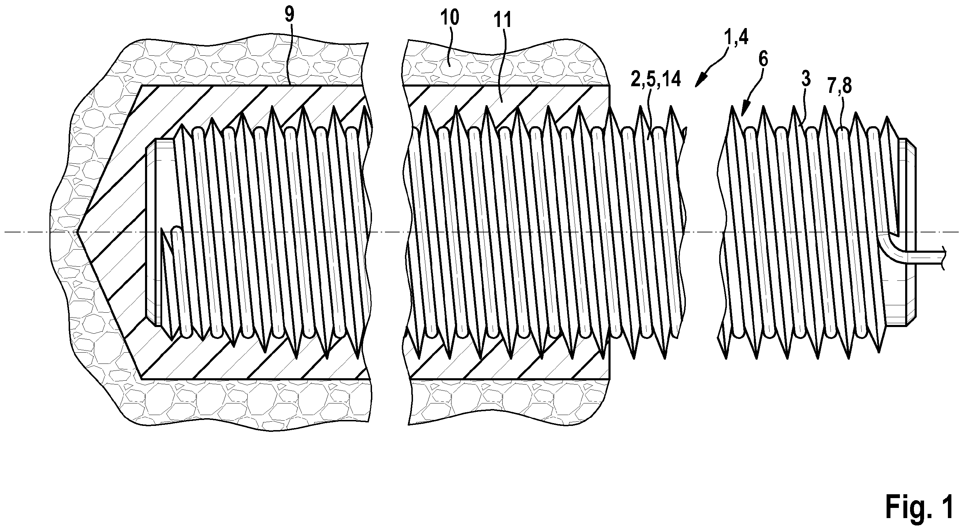

Der in Figur 1 dargestellte, erfindungsgemäße Befestiger 1 weist eine Gewindestange 2 mit einem Gewinde 3 als Anker 4 auf. Die Gewindestange 2 kann auch als Schaft 5 oder als Befestigerkörper 14 aufgefasst werden. Im Ausführungsbeispiel ist das Gewinde 3 ein Spitzgewinde, was allerdings nicht zwingend für die Erfindung ist. In einem Gewindegang 6 des Gewindes 3 ist ein Draht 7 als elektrischer Leiter 8 angeordnet. Der Gewindegang 6 ist eine schraubenlinienförmig umlaufende, bei einem Spitzgewinde V-förmige Einkerbung in einer zylindrischen Mantelfläche der Gewindestange 2. Der Draht 7 verläuft ebenso schraubenlinienförmig wie der Gewindegang 6 und befindet sich an einem Grund des Gewindegangs 6, so dass das Gewinde 3 radial nach außen über den Draht 7 übersteht, der den elektrischen Leiter 8 des Befestigers 1 bildet. Eine gedachte, zylindrische Mantelfläche an einem Außendurchmesser des Gewindes 3 befindet sich außerhalb des schraubenlinienförmig am Grund des Gewindes 3 verlaufenden Drahts 7.

Der Draht 7 ist ein Lackdraht, der mit einem elektrisch isolierenden Isolierlack beschichtet und dadurch elektrisch von der Gewindestange 2 bzw. dem Schaft 5 isoliert ist. Möglich ist beispielsweise auch ein Draht mit einer Kunststoffummantelung als elektrische Isolierung (nicht dargestellt). Der Isolierlack oder eine Kunststoffummantelung können auch als elektrisch isolierende Trennschicht aufgefasst werden. Im Ausführungsbeispiel geht der den elektrischen Leiter 8 bildende Draht 7 von einem zu einem anderen Ende der Gewindestange 2 durch, was allerdings nicht zwingend für die Erfindung ist. Ein Ende des Drahts 7 kann elektrisch leitend mit der Gewindestange 2 bzw. dem Schaft 5 verbunden sein, wodurch diese eine Rückleitung bildet, sofern sie aus einem elektrisch leitenden Werkstoff besteht. Im Ausführungsbeispiel endet der Draht 7 frei ohne elektrisch leitende Verbindung mit der Gewindestange 2. Grundsätzlich kann der Draht 7 auch an einer anderen Stelle als einem Ende oder an mehreren Stellen elektrisch leitend mit der Gewindestange 2 verbunden sein. An einem anderen Ende ist der Draht 7 von der Gewindestange 2 weg zu einer nicht dargestellten Messeinrichtung mit Signalgeber geführt.

Der Befestiger 1 ist mit einem Kunstharzmörtel in einem Sackloch 9 in einem Befestigungsgrund 10 aus beispielsweise Beton befestigt. Das Sackloch 9 kann auch als Hohlraum im Befestigungsgrund 10 und der Kunstharzmörtel kann auch als aushärtende- oder ausgehärtete Masse 11 aufgefasst werden. Das Gewinde 3 bzw. der Gewindegang 6 ist in die ausgehärtete Masse 11 eingebettet und durch die ausgehärtete Masse 11 steht der Draht 7, der den elektrischen Leiter 8 des erfindungsgemäßen Befestigers 1 bildet, mit dem Befestigungsgrund 10 in Kontakt. Möglich ist beispielsweise auch ein Einbetten der Gewindestange 2 in Kunstharz als Befestigungsgrund oder ein Umspritzen der Gewindestange 2 mit einem Kunststoff als Befestigungsgrund, so dass der den elektrischen Leiter 8 bildende Draht 7 unmittelbar in Kontakt mit dem Befestigungsgrund ist (nicht dargestellt).

Die Gewindestange 2 steht zu einer Befestigung eines nicht gezeichneten Gegenstands aus dem Befestigungsgrund 10 vor. Durch Belastung der den Anker 4 bildenden Gewindestange 2, insbesondere durch dynamische- oder stoßartige Belastung, kann es zu Mikrorissen als Beginn einer Schädigung der Befestigung in der aus gehärteten Masse 11 und/oder zwischen der ausgehärteten Masse 11 und der Gewindestange 2 und/oder dem Befestigungsgrund 10 kommen. Bei einer axialen Belastung verschiebt sich die Gewindestange 2 gegenüber dem Befestigungsgrund 10. Durch eine Messung des komplexen Widerstand zwischen dem elektrischen Leiter 8 bildenden Drahts 7 und der Gewindestange 2 bzw. des komplexen Widerstand der Befesigungsanordnung, die aus der Masse 11, der Gewindestange 2 und dem Draht 7 besteht lässt sich eine Verschiebung der Gewindestange 2 gegenüber dem Befestigungsgrund 10 feststellen. Es lässt sich nicht unbedingt ein Verschiebeweg ermitteln, aber feststellen, dass sich die Gewindestange 2 in ihrer Längsrichtung oder einer Belastungsrichtung gegenüber dem Befestigungsgrund 10 bewegt hat. Die ausgehärtete Masse 11 bildet ein Dilektrikum, dessen Permittivität sich durch die Bildung von Mikrorissen und/oder die Verschiebung der Gewindestange 2 ändert. Die Änderung der Permittivität ist durch eine Messung der Impedanz zwischen dem Draht 7 und der Gewindestange 2 möglich. Zur Impedanzmessung wird beispielsweise eine elektrische Wechselspannung an den Draht 7 angelegt und ein Phasenwinkel bzw. eine Änderung des Phasenwinkels zwischen Spannung und Strom gemessen. Alternativ ist eine Messung der Amplitudenänderung des Wechselspannungssignals möglich, da sich die Amplitude des Wechselspannungsignals bei einer Änderung der Impedanz ändert. Eine Änderung der Impedanz ist ein Hinweis auf eine Verschiebung der Gewindestange 2 gegenüber dem Befestigungsgrund 10 und damit ein Hinweis auf eine mögliche Schädigung der Befestigung. Mit der Impedanzmessung kann auch ein Aushärten der aushärtenden Masse 11 festgestellt werden, die ihre Permittivität beim Aushärten ändert. Wie beschrieben lässt sich mit der Impedanzmessung des Drahts 7 eine Verschiebung der Gewindestange 2 gegenüber dem Befestigungsgrund 10 auch dann feststellen, wenn der Befestigungsgrund 10 beispielsweise aus Kunstharz oder Kunststoff besteht und selbst die ausgehärtete Masse 11 bildet. Der den elektrischen Leiter 8 bildende Draht 7 kann auch als elektrische Messeinrichtung zur Feststellung einer Verschiebung des Befestigers 1 oder als Teil einer solchen Messeinrichtung aufgefasst werden.

Alternativ zur Messung der Impedanz kann zur Feststellung einer Verschiebung des Befestigers 1 eine Änderung des ohmschen Widerstands des Drahts 7 oder des Befestigungssystems, bestehend aus Draht 7 und Gewindestange 2, gemessen werden.

Bei einer Verformung der Gewindestange 2 und/oder der Masse 11 wird der Draht 7 zumindest lokal gedehnt, so dass sich der ohmsche Widerstand des Drahts 7 ändert. Eine Änderung des ohmschen Widerstands des Drahts 7 bzw. des Befestigungssystems bewirkt, bei konstantem Stromfluss, eine Änderung der Spannung, die auf einfache Weise gemessen werden kann. Die Änderung des ohmschen Widerstands bzw. der anliegenden Spannung ist ein Maß für die Verschiebung bzw. falls der Draht 7 aufgrund der Verformung reißt und der Stromfluss unterbrochen wird, ein eindeutiges Signal für das Versagen des Befestigungssystems.

Vorzugsweise wird eine Messung als Referenzmessung durchgeführt, wenn die aushärtende Masse 11 ausgehärtet ist. Durch Wiederholung der Messung in gleichen oder unterschiedlichen Zeitabständen oder auch eine kontinuierliche Messung lässt sich eine Änderung der Impedanz des Drahts 7 feststellen, die auf eine Verschiebung der Gewindestange 2 gegenüber dem Befestigungsgrund 10 als Beginn einer Schädigung der Befestigung der den Anker 4 bildenden Gewindestange 2 des erfindungsgemäßen Befestigers 1 im Befestigungsgrund 10 schließen lässt.

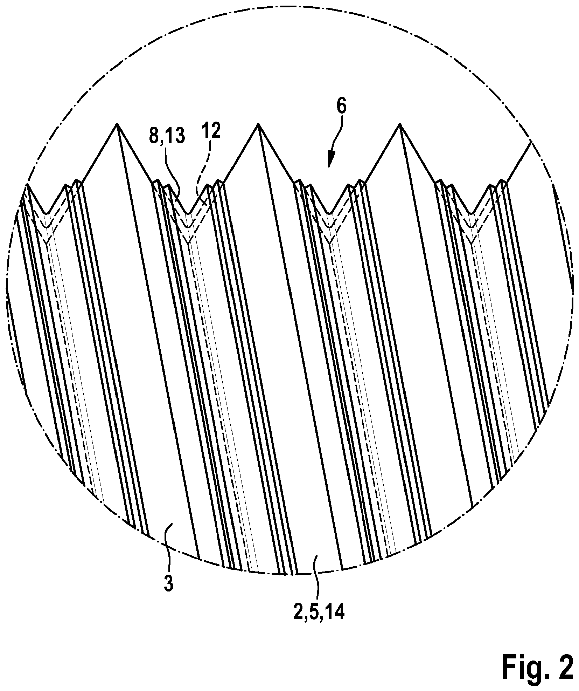

Figur 2 zeigt eine Alternative zu dem Draht 7 als elektrischer Leiter 8: Wie zu sehen, ist an dem Grund des Gewindes 3 im Gewindegang 6 eine elektrisch isolierende Trennschicht 12 und auf dieser eine elektrisch leitende Beschichtung 13 als elektrischer Leiter 8 angebracht.

### Bezugszeichenliste

- 1: Befestiger
- 2: Gewindestange
- 3: Gewinde
- 4: Anker
- 5: Schaft
- 6: Gewindegang
- 7: Draht
- 8: elektrischer Leiter
- 9: Sackloch
- 10: Befestigungsgrund
- 11: ausgehärtete Masse
- 12: Trennschicht
- 13: elektrisch leitende Beschichtung
- 14: Befestigerkörper

## Patentansprüche

1. Befestiger zu einer mechanischen Befestigung, mit einer elektrischen Messeinrichtung oder einem Teil einer elektrischen Messeinrichtung, wobei der Befestiger (1) einen Schaft (5) mit einem Gewinde (3) und einen in einem Gewindegang (6) des Gewindes (3) angeordneten elektrischen Leiter (8) aufweist, der elektrisch von dem Schaft (5) isoliert ist.

2. Befestiger nach Anspruch 1, **dadurch gekennzeichnet, dass** das Gewinde (3) nach außen über den elektrischen Leiter (8) übersteht.

3. Befestiger nach Anspruch 1 oder 2, **dadurch gekennzeichnet, dass** der Leiter (8) ein Draht (7) oder eine elektrisch leitende Beschichtung (13) im Gewindegang (6) ist.

4. Befestiger nach einem der Ansprüche 1 bis 3, **dadurch gekennzeichnet, dass** der Befestiger (1) eine elektrisch isolierende Trennschicht (12) zwischen dem Schaft (5) und dem elektrischen Leiter (8) aufweist.

5. Befestiger nach einem der vorhergehenden Ansprüche, **dadurch gekennzeichnet, dass** der Schaft (5) elektrisch leitend und der elektrische Leiter (8) an einer Kontaktstelle elektrisch leitend mit dem Schaft (5) verbunden ist.

6. Befestiger nach einem der vorhergehenden Ansprüche, **dadurch gekennzeichnet, dass** der Leiter (8) sich im Wesentlichen bis zu einem Ende des Schafts (5) erstreckt.

7. Anordnung mit einem Befestiger nach einem der vorhergehenden Ansprüche, **dadurch gekennzeichnet, dass** das Gewinde (3) des Befestigers (1) in einen Befestigungsgrund (10) eingebettet ist.

8. Anordnung nach Anspruch 7, **dadurch gekennzeichnet, dass** der Befestigungsgrund ein mineralisch, insbesondere ein Beton ist.

9. Anordnung nach Anspruch 7, **dadurch gekennzeichnet, dass** der Befestigungsgrund ein Verbundwerkstoff, insbesondere ein Faserverbundwerkstoff ist.

10. Verfahren zur Feststellung einer Verschiebung eines Befestigers (1), der in einem Befestigungsgrund (10) befestigt ist und der einen Befestigungskörper (14) und einen elektrischen Leiter (8) aufweist, **dadurch gekennzeichnet, dass** eine Änderung der Impedanz zwischen dem elektrischen Leiter (8) und dem Befestigungskörper (14) des Befestigers (1) gemessen wird.

11. Verfahren nach Anspruch 10, **dadurch gekennzeichnet, dass** eine Änderung der Impedanz der Befestigungsanordnung, die eine ausgehärtete Masse (11), den elektrischen Leiter (8) und den Befestigungskörper (14) des Befestigers (1) umfasst, gemessen wird.

12. Verfahren zur Feststellung einer Verschiebung eines Befestigers (1), der in einem Befestigungsgrund (10) befestigt ist und der einen Befestigungskörper (14) und einen elektrischen Leiter (8) aufweist, wobei eine Änderung des ohmschen Widerstands des Leiters, insbesondere eine Änderung des ohmschen Widerstands eines Befestigungssystems, das den elektrischen Leiter (8) und den Befestigungskörper (14) des Befestigers (1) umfasst, gemessen wird, **dadurch gekennzeichnet, dass** bei befestigtem Befestiger (1) der elektrische Leiter (8) in Kontakt mit einer aushärtenden bzw. ausgehärteten Masse (11) steht.

13. Verfahren nach einem der Ansprüche 10 oder Anspruch 11 bis 12, **dadurch gekennzeichnet, dass** der elektrische Leiter (8) in Kontakt mit dem Befestigungsgrund (10) ist.

14. Verfahren nach einem der Ansprüche 10 bis 13, **dadurch gekennzeichnet, dass** der elektrische Leiter (8) zumindest in Abschnitten nicht parallel zu einer Einbringrichtung des Befestigers (1) in den Befestigungsgrund (10) und/oder einer Längsrichtung und/oder einer Längsachse des Befestigers (1) verläuft.

15. Verfahren nach einem der Ansprüche 10 bis 14, **dadurch gekennzeichnet, dass** eine Referenzmessung durchgeführt, mindestens nach einem Zeitabstand die Messung wiederholt und ein Messunterschied ausgewertet wird.

## Claims

1. Fastener to a mechanical mounting, with an electrical measuring device or a part of an electrical measuring device, whereby the fastener (1) has a shaft (5) with a thread (3) and an electrical conductor (8) positioned in a screw thread (6) of the thread (3), the conductor (8) being electrically isolated from the shaft (5).

2. Fastener in accordance with requirement 1, **characterised in that** the thread (3) is protruding to the outside beyond the electrical conductor (8).

3. Fastener in accordance with requirement 1 or 2, **characterised in that** the conductor (8) is a wire (7) or an electrically conductive coating (13) in the screw thread (6).

4. Fastener in accordance with one of the requirements 1 to 3, **characterised in that** the fastener (1) has an electrically isolated separating layer (12) between the shaft (5) and the electrical conductor (8).

5. Fastener in accordance with one of the previous requirements, **characterised in that** the shaft (5) is electrically conductive and the electrical conductor (8) is electrically connected to the shaft (5) at a contact point.

6. Fastener in accordance with one of the previous requirements, **characterised in that** the conductor (8) essentially extends to one end of the shaft (5).

7. Positioning with a fastener in accordance with one of the previous requirements, **characterised in that** the thread (3) of the fastener (1) is embedded in a mounting substrate (10).

8. Positioning in accordance with requirement 7, **characterised in that** the mounting substrate is mineral, more specifically, a concrete.

9. Positioning in accordance with requirement 7, **characterised in that** the mounting substrate is a composite, more specifically, a fibre composite.

10. Process to identify shifting of a fastener (1), which is held in place in a mounting substrate (10) and which has a mounting structure (14) and an electrical conductor (8), **characterised in that** a change in the impedance between the electrical conductor (8) and the mounting structure (14) of the fastener (1) is measured.

11. Procedure in accordance with requirement 10, **characterised in that** a change in the impedance of the mounting arrangements, which comprises the hardened compound (11), the electrical conductor (8), and the mounting structure (14) of the fastener (1), is measured.

12. Process to identify shifting of a fastener (1), which is held in place in a mounting substrate (10) and which has a mounting structure (14) and an electrical conductor (8), whereby a change in the ohmic resistance of the conductor, in particular, a change in the ohmic resistance of a mounting system including the electrical conductor (8) and the mounting structure (14) of the fastener (1) is measured, **characterised in that** where the fastener (1) is mounted, the electrical conductor (8) is in contact with a hardening or hardened compound (11).

13. Process in accordance with one of the requirements 10 or requirement 11 to 12, **characterised in that** the electrical conductor (8) is in contact with the mounting substrate (10).

14. Process in accordance with one of the requirements 10 to 13, **characterised in that** the electrical conductor (8) does not, at least in part, run parallel to an insertion direction of the fastener (1) into the mounting substrate (10) and/or a lengthwise and/or a longitudinal axis of the fastener (1).

15. Process in accordance with one of the requirements 10 to 14, **characterised in that** a reference measurement is carried out, the measurement is repeated at least after a time interval has elapsed, and any difference between measurements is analysed.

## Revendications

1. Élément de fixation pour une fixation mécanique, avec un appareil de mesure électrique ou une partie d'un appareil de mesure électrique, l'élément de fixation (1) ayant une tige (5) avec un filetage (3) et un conducteur électrique (8) disposé dans un filetage (6) du filetage (3) isolé électriquement de l'arbre (5).

2. Élément de fixation selon l'exigence 1, **caractérisée par le fait que** le filetage (3) dépasse vers l'extérieur du conducteur électrique (8).

3. Élément de fixation selon l'exigence 1 ou 2, **caractérisée par le fait que** le conducteur (8) est un fil (7) ou un revêtement électriquement conducteur (13) dans le filetage (6).

4. Élément de fixation selon l'une des exigences 1 à 3, **caractérisée par le fait que** l'élément de fixation (1) est dotée d'une couche de séparation électriquement isolante (12) entre la tige (5) et le conducteur électrique (8).

5. Élément de fixation selon l'une des exigences précédentes, **caractérisée par le fait que** la tige (5) est reliée électriquement et le conducteur électrique (8) est relié électriquement à la tige (5) en un point de contact.

6. Élément de fixation selon l'une des exigences précédentes, **caractérisée par le fait que** le conducteur (8) s'étend essentiellement jusqu'à une extrémité de la tige (5).

7. Agencement avec un élément de fixation selon l'une des exigences précédentes, **caractérisé par le fait que** le filetage (3) de l'élément de fixation (1) est intégré dans un support de fixation (10).

8. Agencement selon l'exigence 7, **caractérisée par le fait que** le support de fixation est minéral, notamment en béton.

9. Agencement selon l'exigence 7, **caractérisée par le fait que** le support de fixation est un matériau composite, notamment un matériau composite en fibre.

10. Processus de détection d'un déplacement d'un 'élément de fixation (1) qui est fixée dans un support de fixation (10) et dotée d'un corps de montage (14) et d'un conducteur électrique (8), **caractérisé par** une variation de l'impédance entre le conducteur électrique (8) et le corps de montage (14) de l'élément de fixation (1).

11. Processus selon l'exigence 10, **caractérisé par** la mesure de la variation de l'impédance de l'agencement de la fixation, qui comprend une masse durcie (11), le conducteur électrique (8) et le corps de montage (14) de l'élément de fixation (1).

12. Processus de détection d'un déplacement d'un élément de fixation (1) qui est fixée dans un support de fixation (10) et qui comprend un corps de montage (14) et un conducteur électrique (8), dans lequel on mesure une variation de la résistance ohmique du conducteur, notamment une variation de la résistance ohmique d'un système de fixation, qui comprend le conducteur électrique (8) et le corps de montage (14) de l'élément de fixation (1), **caractérisé par le fait que,** lorsque l'élément de fixation (1) est fixé, le conducteur électrique (8) est en contact avec une masse (11) qui durcit ou qui a durci.

13. Processus selon l'une des exigences 10 ou des exigences 11 à 12, **caractérisé par le fait que** le conducteur électrique (8) est en contact avec le support de fixation (10).

14. Processus selon l'une des exigences 10 à 13, **caractérisé par le fait que** le conducteur électrique (8), au moins par tronçons, n'est pas parallèle à une direction d'insertion de l'élément de fixation (1) dans le support de fixation (10) et/ou qu'il ne s'étend pas dans une direction longitudinale et/ou un axe longitudinal de l'élément de fixation (1).

15. Processus selon l'une des exigences 10 à 14, **caractérisé par le fait qu'**une mesure de référence est effectuée, la mesure est répétée au moins après un intervalle de temps et une variation de la mesure est évaluée.
